# EUROPÄISCHE PATENTANMELDUNG

(11) **EP 2 107 292 A1**
(43) Veröffentlichungstag der Anmeldung: **07.10.2009**
(21) Anmeldenummer: 09004528.7
(22) Anmeldetag: 30.03.2009
(51) Int. Cl.: F16L 55/1645

(54) **Injektionspacker für die Rohr- und Kanalsanierung**

(30) Priorität: 03.04.2008 DE 202008004685 U
(71) Anmelder: JS Kanalrobotik GmbH, 76287 Rheinstetten (DE)
(72) Erfinder: Thomas, Joachim, 76287 Rheinstetten (DE); Sennert, Bernd, 71665 Vaihingen an der Enz (DE)
(74) Vertreter: Lemcke, Brommer & Partner

(57) **Zusammenfassung**

Ein Injektionspacker (1) für die Rohr- und Kanalsanierung, der eine an den inneren Querschnitt des Rohres oder Kanals anpassbare dehnbare Hülle (6) und wenigstens eine erste Schlauchleitung (8) aufweist, die zum Ausbringen eines aushärtbaren Injektionsmittels an einer Schadstelle des Rohres oder Kanals von außen in den Packer (1) und dort insbesondere radial nach außen zu einer Ausbringöffnung (7) in der Hülle (6) geführt ist, zeichnet sich dadurch aus, dass in die erste Schlauchleitung (8) eine zweite Schlauchleitung (9) austauschbar eingesetzt ist, so dass das Injektionsmittel beim Ausbringen an der Schadstelle ausschließlich mit der zweiten Schlauchleitung (9) in Kontakt kommt.

## Beschreibung

Die vorliegende Erfindung betrifft einen Injektionspacker nach dem Oberbegriff des Patentanspruchs 1 für die Rohr- und Kanalsanierung, der eine an den inneren Querschnitt des Rohres oder Kanals anpassbare dehnbare Hülle und wenigstens eine erste Schlauchleitung aufweist, wobei letztere zum Ausbringen eines aushärtbaren Injektionsmittels an einer Schadstelle des Rohres oder des Kanals von außen in den Packer und dort insbesondere radial nach außen zu einer Ausbringöffnung in der dehnbaren Hülle geführt ist.

Rohre oder Kanäle, die im Erdreich verlegt bzw. angelegt wurden, können diverse Schäden aufweisen. Einerseits handelt es sich bei derartigen Schäden häufig um Scherben oder Rissbildungen. Andererseits können auch die Verbindungen zwischen einzelnen Rohr- oder Kanalsegmenten (Muffen) schadhaft und/oder undicht sein. Bei einem solchen Schadensbild kann Grundwasser in das Rohr- oder Kanalsystem eindringen; umgekehrt kann Schmutzwasser in das umgebene Erdreich sowie in das Grundwasser eindringen und dieses verschmutzen. In beiden Fällen ist eine Sanierung des Rohres oder Kanals erforderlich.

Für eine Sanierung der vorstehend exemplarisch genannten Schäden stehen heutzutage unterschiedliche Systeme zur Verfügung. In jedem Fall muss die Sanierung jedoch gewährleisten, dass die Schadstelle dauerhaft abgedichtet wird. Zu diesem Zweck werden die entsprechenden Schadstellen mit einem Fräsroboter vorbereitet, das heißt lose Scherben werden entfernt, Risse aufgefräst und dergleichen, so dass anschließend einzubringendes Verpressmaterial (Injektionsmittel, insbesondere injektionsharze) jeweils in den Schadensbereich vordringen und diesen kraftschlüssig schließen bzw. verbinden kann. Nach Abschluss der vorstehend beschriebenen vorbereitenden Maßnahmen wird die Schadstelle für die anschließende Sanierung gereinigt.

Für die weitere Sanierung kommen zum Einschalen der Schadstelle pneumatische Injektionspacker der eingangs genannten Art zum Einsatz. Dabei wird die dehnbare Hülle des Injektionspackers mittels eines Druckmediums, wie Druckluft oder dergleichen, soweit gedehnt, dass sie an der Rohr- oder Kanalwand anliegt und auf diese Weise einen dahinter oder dazwischen liegenden Hohlraum abdichtet, welcher die Schadstelle enthält. Anschließend wird das Reparaturmaterial (Injektionsmittel) durch Schläuche, die durch den Packer verlaufen, über eine Ausbringöffnung in dem Bereich der Schadstelle ausgebracht.

Ein derartiges Verfahren und eine entsprechende Vorrichtung zur Rohr- und Kanalsanierung ist beispielsweise in der DE 10 2006 062 337 B3 beschrieben. Beim Gegenstand der genannten Druckschrift wird das Injektionsmittel in Form zweier getrennter Komponenten bereitgestellt und vor dem Packer durch eine Mischstrecke und einen anschließenden Schlauch zur Ausbringöffnung gepumpt. Dabei hat sich als nachteilig herausgestellt, dass sowohl der Mischer als auch der Schlauch nach jeder Verpressung erneuert werden müssen, zu welchem Zweck der Packer geöffnet werden muss, was sich als kostspielig und zeitaufwändig herausgestellt hat.

Bei einem anderen vorbekannten Verfahren, beispielsweise gemäß der DE 42 32 059 A1, wird das Injektionsmittel in zwei getrennten Schläuchen durch den Packer gepumpt und erst direkt an der Ausbringöffnung gemischt. Hierbei hat sich insbesondere als nachteilig herausgestellt, dass aufgrund der relativ kurzen Mischstrecke keine ausreichende Vermischung der unterschiedlichen Komponenten des Injektionsmittels gewährleistet ist.

Der Erfindung liegt die Aufgabe zugrunde, einen Injektionspacker der eingangs genannten Art dahingehend weiterzuentwickeln, dass bei ausreichender Vermischung der Injektionsmittelkomponenten die zur Handhabung, d. h. insbesondere zur Wartung und/oder Einsatzvorbereitung des Packers benötigte Zeit reduziert ist.

Die Erfindung löst die Aufgabe mittels eines Injektionspackers mit den Merkmalen des beigefügten Patentanspruchs 1. Bevorzugte Weiterbildungen des erfindungsgemäßen Injektionspackers sind Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist ein Injektionspacker für die Rohr- und Kanalsanierung, der eine an den inneren Querschnitt des Rohres oder Kanals anpassbare dehnbare Hülle und wenigstens eine erste Schlauchleitung aufweist, die zum Ausbringen eines aushärtbaren Injektionsmittels an einer Schadstelle von außen in den Packer und dort insbesondere radial nach außen zu einer Ausbringöffnung in der Hülle geführt ist, **dadurch gekennzeichnet, dass** in die erste Schlauchleitung eine zweite Schlauchleitung austauschbar eingesetzt ist, so dass das Injektionsmittel beim Ausbringen an der Schadstelle ausschließlich mit der zweiten Schlauchleitung in Kontakt kommt.

Auf diese Weise erreicht die Erfindung eine erhebliche Verkürzung der Vorbereitungszeit beim Einsatz eines Injektionspackers zur Rohr- und Kanalsanierung. Statt nur eine Schlauchleitung zum Fördern des Injektionsmittels vorzusehen, wird erfindungsgemäß der eigentliche Materialschlauch (die zweite Schlauchleitung) austauschbar in einer weiteren Schlauchleitung (der ersten Schlauchleitung) geführt, so dass das Injektionsmittel beim Ausbringen an der Schadstelle ausschließlich mit der zweiten Schlauchleitung in Kontakt kommt und entsprechend nur letztere verschmutzt wird.

Dabei ist in Weiterbildung der vorliegenden Erfindung die erste Schlauchleitung als eine im Wesentlichen druckfeste Schlauchleitung insbesondere aus metallbewehrtem Kunststoff ausgebildet. Bei der zweiten Schlauchleitung kann es sich um eine flexible Schlauchleitung handeln, die aus einem entsprechend geeigneten Kunststoff besteht. Die zweite, flexible Schlauchleitung wird im Packer durch die druckfeste erste Schlauchleitung bis zur Ausbringöffnung für das Injektionsmittel geführt bzw. geschoben und kann dort mit einer speziellen Schlauchverschraubung druckdicht befestigt werden.

Entsprechende Weiterbildungen der vorliegenden Erfindung sehen vor, dass zum Schaffen der genannten speziellen Schlauchverschraubung zunächst die erste Schlauchleitung mit ihrem einen Ende an der dehnbaren Hülle des Injektionspackers festgelegt ist, wobei sie auf ein entsprechendes Anschlussstück aufgesteckt sein kann, welches an der dehnbaren Hülle befestigt ist, insbesondere mittels eines in die Hülle einvulkanisierten Befestigungselements.

Weiterhin kann vorgesehen sein, dass die zweite Schlauchleitung in das genannte Anschlussstück für die erste Schlauchleitung eingesteckt ist und dass die zweite Schlauchleitung in dem genannten Anschlussstück klemmend gehalten ist. Im Zuge einer anderen Weiterbildung weist das genannte Anschlussstück einen Gewindeabschnitt auf, in bzw. auf welchen ein Klemmteil, das in die zweite Schlauchleitung eingesteckt bzw. einsteckbar ist, ein- bzw. aufschraubbar ist, so dass die zweite Schlauchleitung anschließend zwischen dem Klemmteil und dem genannten Anschlussstück klemmend gehalten ist.

Das Klemmteil kann einen durchgängigen zentralen Durchbruch aufweisen, der zum Ausbringen des Injektionsmittels mit der zweiten Schlauchleitung in Verbindung steht.

Weiterhin weist das Klemmteil vorzugsweise einen Gewindeabschnitt auf, der zum Verbinden mit dem genannten Anschlussstück vorgesehen ist, sowie einen Klemmabschnitt, der zum Einstecken in die zweite Schlauchleitung dient.

Um die zweite Schlauchleitung auf dem Klemmabschnitt zu halten, kann dieser wenigstens ein Klemmmittel umfassen, welches insbesondere als umlaufender Klemmvorsprung ausgebildet sein kann.

Zum Erneuern des Materialschlauchs muss anschließend lediglich die vorstehend beschriebene Schlauchverschraubung geöffnet werden. Anschließend lässt sich der gebrauchte und verschmutzte innere Materialschlauch, d. h. die zweite Schlauchleitung ohne Öffnen des Packers aus diesem herausziehen und durch einen neuen ersetzen, welcher einfach von außen durch die erste Schlauchleitung in den Packer eingeführt und dort gesichert wird. Das nach dem Stand der Technik erforderliche zeitaufwändige Öffnen des Packers entfällt.

Nachfolgend wird das Sichern der zweiten Schlauchleitung unter Verwendung der weiter oben beschriebenen speziellen Schlauchverschraubung an einem konkreten Ausführungsbeispiel nochmals genauer erläutert:

Die zweite Schlauchleitung, die als eigentlicher Materialschlauch dient, wird von außen in den Packer bzw. in dessen erste Schlauchleitung (druckfeste Schlauchleitung) eingeschoben und dringt bis in den Bereich der Ausbringöffnung für das Injektionsmittel vor, wo sie aus der ersten Schlauchleitung heraustritt. Dort wird anschließend zunächst das Klemmteil mit seinem Klemmabschnitt in die zweite Schlauchleitung eingesteckt, wobei das beschriebene Klemmmittel für einen sicheren Halt des Klemmteils in der zweiten Schlauchleitung sorgt. Anschließend wird das Klemmteil mit seinem Gewindeabschnitt in das genannte Anschlussstück eingeschraubt, welches an der dehnbaren Hülle des Packers festgelegt ist und einen entsprechenden komplementären Gewindeabschnitt aufweist. Anschließend ist die zweite Schlauchleitung zwischen dem Klemmteil und dem genannten Anschlussstück klemmend gehalten, wobei die beschriebene Schlauchverschraubung druckdicht ist, um das Injektionsmittel mit relativ hohem Druck im Bereich der Schadstelle auszubringen.

Auf diese Weise ist die zweite Schlauchleitung ohne Öffnen des Injektionspackers in die erste Schlauchleitung einführbar bzw. aus dieser entnehmbar, nach der vorstehenden Beschreibung gegebenenfalls nach Abschrauben des Klemmteils von dem genannten Anschlussstück und/oder nach Entfernen des Klemmteils von der zweiten Schlauchleitung.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: einen Längsschnitt durch einen erfindungsgemäßen Injektionspacker, der in eine zu sanierende Rohrleitung eingebracht ist;
- Figur 2: eine detaillierte Querschnittsansicht eines erfindungsgemäßen Injektionspackers, welcher im Wesentlichen demjenigen gemäß Figur 1 entspricht;
- Figur 3: eine Gesamtansicht der ersten und zweiten Schlauchleitungen bei einem erfindungsgemäßen Injektionspacker zusammen mit Flansch, Anschlussstücken und Klemmteil für die zweite Schlauchleitung;
- Figur 4: die Anordnung gemäß Figur 3 ohne Klemmteil im Längsschnitt; und
- Figur 5: eine vergrößerte Längsschnittansicht der ersten und zweiten Schlauchleitungen zusammen mit Anschlussstück und eingeschraubtem Klemmteil am Ausbringende für das Injektionsmedium.

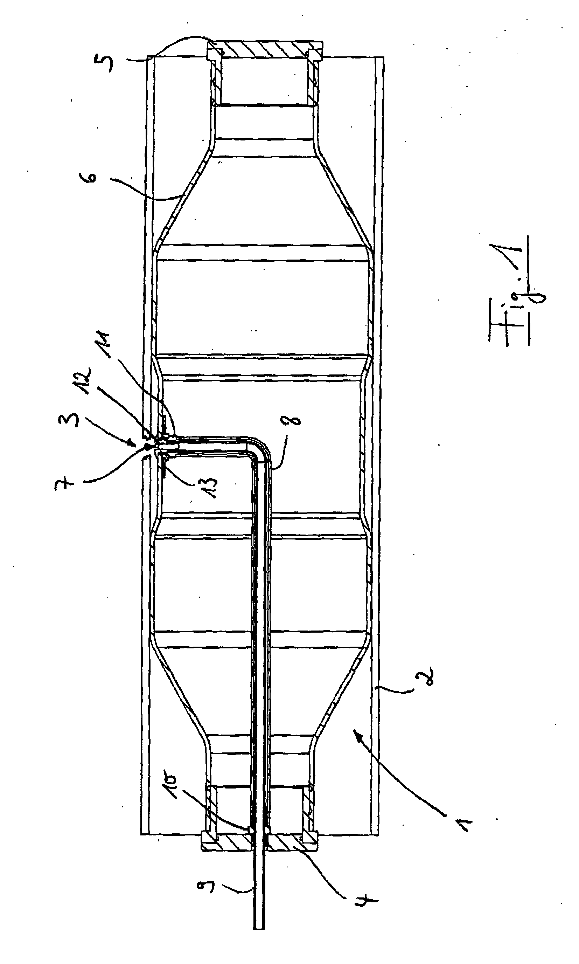

Figur 1 zeigt eine Ausgestaltung des erfindungsgemäßen Injektionspackers, der als Ganzes mit dem Bezugszeichen 1 bezeichnet und zur Rohrsanierung in eine Rohrleitung 2 eingebracht ist, die bei Bezugszeichen 3 eine zu verschließende Schadstelle aufweist. Der Injektionspacker 1 (im Rahmen dieser Beschreibung auch kurz als "Packer" bezeichnet) weist an seinen Enden Flansche 4, 5 auf, die mittels einer dehnbaren Hülle 6 verbunden sind, welche in an sich bekannter Weise mit einem Druckmedium füllbar und so an den inneren Querschnitt des zu sanierenden Rohres 2 anpassbar ist, worauf vorliegend nicht weiter eingegangen wird. Bei Bezugszeichen 7 weist der Packer 1 eine Ausbringöffnung für ein Injektionsmedium, insbesondere ein Zwei-Komponenten-Injektionsharz auf, welche im Bereich der schadhaften Stelle 3 positioniert wird, um diese durch Ausbringen des Injektionsmediums in diesem Bereich zu sanieren.

Zu diesem Zweck weist der Packer 1 eine erste Schlauchleitung 8 in Form eines druckfesten Schlauches (Druckschlauch) auf, welche sich von dem Flansch 4 im Wesentlichen bis zu der dehnbaren Hülle 6 im Bereich der genannten Ausbringöffnung 7 erstreckt. Der Druckschlauch 8 kann in Form eines insbesondere metallbewehrten PVC-Schlauchs ausgebildet sein, jedoch ist die vorliegende Erfindung keinesfalls auf eine derartige Ausgestaltung beschränkt. Damit der Druckschlauch 8 nicht mit dem aushärtenden bzw. aushärtbaren Injektionsmedium in Kontakt kommt und verschmutzt, ist innerhalb des Druckschlauchs 8 eine zweite Schlauchleitung 9 insbesondere in Form eines flexiblen, das heißt nicht druckfesten PVC-Schlauchs angeordnet. Die zweite Schlauchleitung erstreckt sich durch den Flansch 4 und den gesamten Druckschlauch 8 hindurch im Wesentlichen bis zu der Austrittsöffnung 7, worauf weiter unten noch genauer eingegangen wird. Vorteilhafterweise kann die zweite Schlauchleitung 9 nach Hindurchströmen des Injektionsmediums aus der ersten Schlauchleitung bzw. dem Druckschlauch 8 entnommen und gegen eine saubere Schlauchleitung ausgetauscht werden, wobei die zweite Schlauchleitung 9 durch den Flansch 4 hindurch aus dem Packer 1 entnommen wird, ohne diesen zu öffnen, worauf ebenfalls weiter unten noch genauer eingegangen wird.

Wie der Figur 1 noch zu entnehmen ist, weist der Injektionspacker 1 bei Bezugszeichen 10 ein erstes Anschlussstück zum Verbinden des Druckschlauchs 8 mit dem Flansch 4 und bei Bezugszeichen 11 ein zweites, vorzugsweise identisches Anschlussstück 11 zum Verbinden des Druckschlauchs 8 sowohl mit der dehnbaren Hülle 6 als auch mit der zweiten Schlauchleitung 9 auf, worauf ebenfalls weiter unten noch genauer eingegangen wird. Bezugszeichen 12 bezeichnet ein noch näher zu beschreibendes Klemmteil zum Verbinden der zweiten Schlauchleitung 9 mit dem zweiten Anschlussstück 11, und Bezugszeichen 13 bezeichnet ein weiteres Element zum Befestigen des zweiten Anschlussstücks 11 an der dehnbaren Hülle 6, welches fest in der Hülle 6 integriert, beispielsweise einvulkanisiert ist.

Wie der Fachmann weiß, arbeitet der gezeigte Injektionspacker 1 zumindest noch mit einer innerhalb oder außerhalb des zu sanierenden Rohres 2 angeordneten Versorgungseinheit für das Injektionsmedium und/oder zur Druckbeaufschlagung der Hülle 6 zusammen, die vorliegend nicht zeichnerisch dargestellt ist. Des Weiteren kann eine Fahreinheit zum Bewegen des Packers 1 innerhalb der Rohrleitung 2 vorgesehen sein, die vorliegend ebenfalls nicht zeichnerisch dargestellt ist.

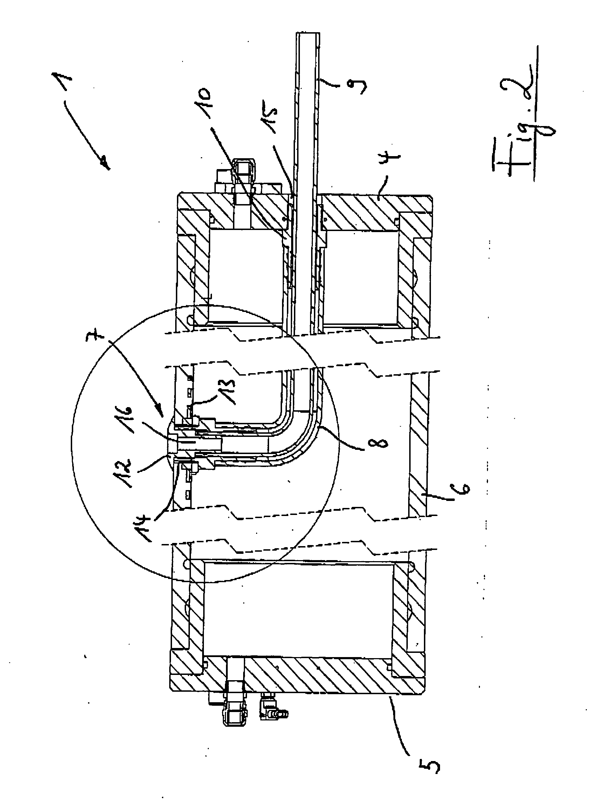

Figur 2 zeigt eine detailliertere Querschnittsansicht eines erfindungsgemäßen Injektionspackers 1, welcher im Wesentlichen demjenigen in Figur 1 entspricht. Hier wie auch in den anderen Figuren bezeichnen gleiche Bezugszeichen gleiche oder gleichwirkende Elemente, so dass jeweils nur auf Besonderheiten der gewählten Darstellung bzw. Ausführungsform näher eingegangen wird.

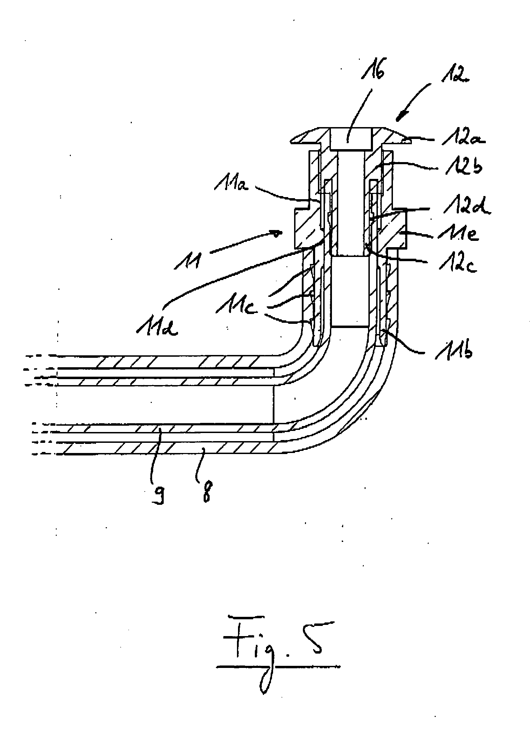

In Figur 2 ist die dehnbare Hülle 6 in ihrem nicht aufgeblasenen Zustand, das heißt vor einer Positionierung in einer zu sanierenden Rohrleitung gezeigt. Das Anschlussstück 11 ist mit einem nicht näher bezeichneten Außengewinde in das Befestigungselement 13 eingeschraubt, so dass ein Festlegen des Anschlussstücks 11 und damit auch des Druckschlauchs 8 an der Hülle 6 im Bereich der Ausbringöffnung 7 ermöglicht ist. Bei letzterer weist die Hülle 6 eine Öffnung 14 auf, in welche das Klemmteil 12 eingesetzt ist. Auf eine mögliche Ausgestaltung des Anschlussstücks 11 und des Klemmteils 12 wird weiter unten anhand der Figur 5 noch detailliert eingegangen.

An dem Klemmteil 12 ist die zweite, innere Schlauchleitung 9 klemmend zwischen dem Klemmteil 12 und dem zweiten Anschlussstück 11 gehalten. Zu diesem Zweck ist das Klemmteil 12 in das zweite Anschlussstück 11 eingeschraubt, worauf ebenfalls weiter unten noch genauer eingegangen wird. Der Druckschlauch 8 ist sowohl auf das erste Anschlussstück 10 (am Flansch 4) als auch auf das zweite Anschlussstück 11 (an der Hülle 6) aufgesteckt und an diesen gehalten. Das erste Anschlussstück 10, welches abgesehen von einem fehlenden Innnengewinde zum Einschrauben eines Klemmteils zu dem zweiten Anschlussstück 11 im Wesentlichen identisch ausgebildet ist, ist mit seinem bereits erwähnten Außengewinde in ein entsprechendes Innengewinde im Bereich eines Durchbruchs 15 des Flansches 4 eingeschraubt, wobei der genannte Durchbruch 15 auch zum Durchführen und gegebenenfalls zum Entnehmen der zweiten Schlauchleitung 9 dient, wie weiter oben bereits beschrieben.

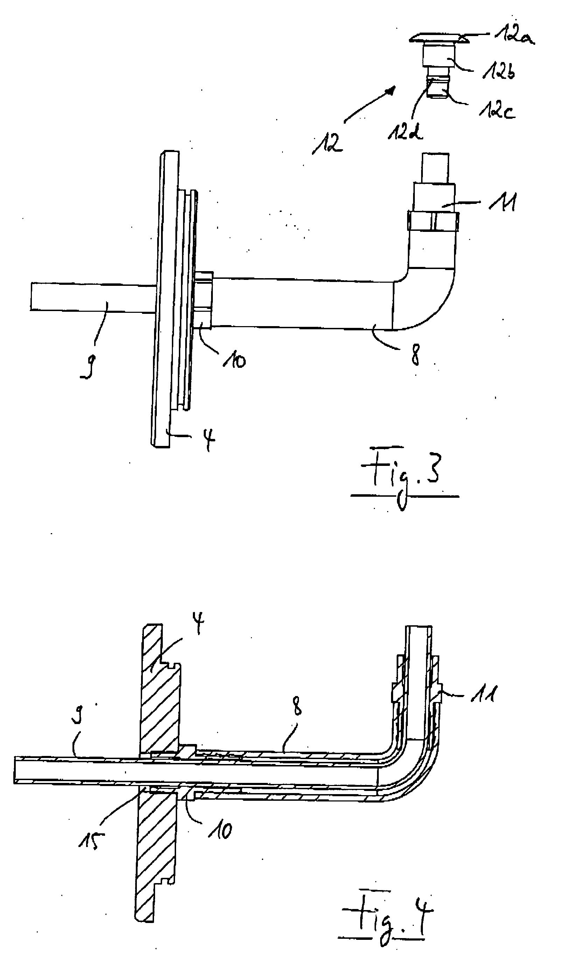

Wie bereits ausgeführt, ist das Befestigungselement 13 dauerhaft an der Hülle 6 festgelegt, beispielsweise durch Einvulkanisieren, wodurch sich eine entsprechende (lösbare) Festlegung des zweiten Anschlussstücks 11 im Bereich der Öffnung 14 an der Hülle 6 ergibt. Zu diesem Zweck weist die Öffnung 14 vorteilhafterweise einen etwas größeren Querschnitt auf, als zum Einbringen des Klemmteils 12 erforderlich ist, was in Figur 2 auch zeichnerisch dargestellt ist. Entsprechend weist das Klemmteil 12 an seinem außerhalb der Hülle 6 angeordneten Ende eine radiale Verbreiterung auf, um ein Durchrutschen durch die Öffnung 14 zu verhindern, worauf weiter unten anhand von Figur 3 noch näher eingegangen wird.

Vorteilhafterweise wird also das zweite Anschlussstück 11 mit seinem freien Ende in die Öffnung 14 der Hülle 6 eingesteckt und dort bzw. in dieser Stellung mittels des Befestigungselements 13 gesichert, wie oben beschrieben. Andererseits wird das erste Anschlussstück 10 in den Flansch 4 eingeschraubt, und der Druckschlauch 8 wird auf die ersten und zweiten Anschlussstücke 10, 11 aufgesteckt, so dass sich eine druckdichte Verbindung innerhalb der Hülle 6 des Injektionspackers 1 von dem Flansch 4 bis zur Ausbringöffnung 7 ergibt. Anschließend wird die zweite, innere Schlauchleitung 9 durch die erste, äußere Schlauchleitung 8 geführt und mittels des Klemmteils 12 an dem zweiten Anschlussstück 11 sowie im Bereich der Ausbringöffnung 7 gesichert, wobei das Klemmteil 12 eine zentrale, durchgängige Bohrung 16 aufweist, so dass sich ein durchgängiger Kanal über die zweite Schlauchleitung 9 bis zur Ausbringöffnung 7 ergibt.

Figur 3 zeigt eine detailliertere Gesamtansicht der bereits beschriebenen Anordnung aus Flansch 4 mit durchgeführter innerer Schlauchleitung 9, äußerem Druckschlauch 8, Anschlussstücken 10, 11 und Klemmteil 12. In Figur 3 sind gut die bereits erwähnte radiale Verbreiterung 12a des Klemmteils 12 sowie der äußere Gewindeabschnitt 12b zum Einschrauben in das (zweite) Anschlussstück 11 und der Klemmabschnitt 12c zum klemmenden Halten der inneren Schlauchleitung 9 erkennbar. Wie in der Figur 3 weiterhin zu entnehmen ist, ist im Bereich des Klemmabschnitts 12c ein Klemmmittel in Form eines umlaufenden Klemmvorsprungs 12d vorgesehen.

Die vorstehend beschriebenen Strukturen des Klemmteils 12 sind in Figur 5 noch deutlicher zu erkennen.

Figur 4 zeigt eine Schnittansicht, welche im Wesentlichen der bereits anhand von Figur 3 beschriebenen Anordnung entspricht, wobei jedoch das Klemmteil 12 nicht erneut dargestellt ist.

Der Figur 4 ist insbesondere nochmals zu entnehmen, wie das erste Anschlussstück 10 im Bereich der Durchführung 15 in den Flansch 4 eingeschraubt ist. Der Druckschlauch 8 ist zwischen dem ersten Anschlussstück 10 und dem zweiten Anschlussstück 11 angeordnet und insbesondere auf diese aufgesteckt. Die zweite Schlauchleitung 9 ist im Bereich der Durchführung 15 durch den Flansch 4, anschließend durch das erste Anschlussstück 10, den Druckschlauch 8 und schließlich durch das zweite Anschlussstück 11 geführt. Keines der weiteren Elemente in Figur 4 kommt mit einem durch die innere Schlauchleitung 9 geführten Injektionsmedium in Kontakt.

Figur 5 zeigt detailliert die Anordnung von Druckschlauch 8, innerer Schlauchleitung 9, (zweitem) Anschlussstück 11 und Klemmteil 12. Weitere Elemente des erfindungsgemäßen injektionspackers 1 sind aus Gründen der Übersichtlichkeit nicht dargestellt.

In Ergänzung zu den bereits beschriebenen Figuren ist in Figur 5 ein Innengewinde des zweiten Anschlussstücks 11 zum Einschrauben des Klemmteils mit dem Bezugszeichen 11a und ein Aufsteckende für den Druckschlauch 8 mit dem Bezugszeichen 11 b bezeichnet. An dem Aufsteckende 11 b weist das Anschlussstück 11 weiterhin eine Anzahl von im Querschnitt sägezahnförmigen, umlaufenden Vorsprüngen 11c auf, die für einen sicheren Halt des Druckschlauchs 8 an dem Anschlussstück 11 sorgen. Das erste Anschlussstück 10 (vgl. z. B. Figur 2) ist entsprechend ausgestaltet.

Das Klemmteil 12 wird mit seinem Gewindeabschnitt 12b in das Innengewinde 11a des Anschlussstücks 11 eingeschraubt und klemmt mit seinem Vorsprung 12d die innere Schlauchleitung 9 zwischen dem Klemmteil 12 und einem umlaufenden Vorsprung 11d der Innenwand des Anschlussstücks 11. Eine umlaufende Außenwulst 11 e des Anschlussstücks 11 zwischen dem Aufsteckende 11 b und dem Bereich des Innengewindes 11 a dient einerseits als Anschlag beim Aufstecken des Druckschlauchs 8 und andererseits als Anschlag beim Einschrauben des Anschlussstücks 11 bzw. des identisch ausgebildeten Anschlussstücks 10 in den Flansch 4 (vgl. beispielsweise Figur 4).

Zum Entnehmen einer verunreinigten inneren Schlauchleitung 9 wird das Klemmteil 12 aus dem Anschlussstück 11 ausgeschraubt und anschließend die Schlauchleitung 9 von dem Klemmteil 12 abgezogen. Anschließend kann die innere Schlauchleitung 9 aus dem Druckschlauch 8 und durch den Flansch 4 (vgl. beispielsweise Figur 2) entfernt werden, ohne den Packer 1 zu öffnen. In umgekehrter Weise kann anschließend eine neue innere Schlauchleitung 9 in den Packer eingesetzt und im Bereich des Anschlussstücks 11 fixiert werden, wie vorstehend detailliert beschrieben. Der Injektionspacker 1 ist dann erneut zum Ausbringen von Injektionsmittel zur Rohr- oder Kanalsanierung bereit.

## Patentansprüche

1. Injektionspacker (1) für die Rohr- und Kanalsanierung, der eine an den inneren Querschnitt des Rohres (2) oder Kanals anpassbare dehnbare Hülle (6) und wenigstens eine erste Schlauchleitung (8) aufweist, die zum Ausbringen eines aushärtbaren Injektionsmittels an einer Schadstelle (3) des Rohres oder Kanals von außen in den Packer (1) und dort insbesondere radial nach außen zu einer Ausbringöffnung (7) in der Hülle (6) geführt ist, **dadurch gekennzeichnet,**
**dass** in die erste Schlauchleitung (8) eine zweite Schlauchleitung (9) austauschbar eingesetzt ist, so dass das Injektionsmittel beim Ausbringen an der Schadstelle (3) ausschließlich mit der zweiten Schlauchleitung (9) in Kontakt kommt.

2. Injektionspacker (1) nach Anspruch 1, **dadurch gekennzeichnet,**
**dass** die erste Schlauchleitung (8) eine im Wesentlichen druckfeste Schlauchleitung insbesondere aus metallbewehrtem Kunststoff ist.

3. Injektionspacker (1) nach Anspruch 1 oder 2, **dadurch gekennzeichnet,**
**dass** die zweite Schlauchleitung (9) eine insbesondere aus Kunststoff bestehende flexible Schlauchleitung ist.

4. Injektionspacker (1) nach mindestens einem der Ansprüche 1 bis 3, **dadurch gekennzeichnet,**
**dass** die erste Schlauchleitung (8) mit ihrem einen Ende an einem quer zum Rohr (2) oder Kanal anordenbaren Flansch (4) des Injektionspackers (1) und mit ihrem anderen Ende an der dehnbaren Hülle (6) festgelegt ist.

5. Injektionspacker (1) nach Anspruch 4, **dadurch gekennzeichnet,**
**dass** die erste Schlauchleitung (8) auf ein entsprechendes erstes (10) und/oder zweites Anschlussstück (11) an dem Flansch (4) bzw. an der dehnbaren Hülle (6) aufgesteckt und dort gehalten ist.

6. Injektionspacker (1) nach Anspruch 5, **dadurch gekennzeichnet,**
**dass** ein Befestigungselement (13) zum insbesondere lösbaren Festlegen des zweiten Anschlussstücks (11) für die erste Schlauchleitung (8) dauerhaft an der dehnbaren Hülle (6) befestigt und insbesondere in der dehnbaren Hülle (6) einvulkanisiert ist.

7. Injektionspacker (1) nach Anspruch 5 oder 6, **dadurch gekennzeichnet,**
**dass** die zweite Schlauchleitung (9) in das jeweilige Anschlussstück (10, 11) für die erste Schlauchleitung (8) eingesteckt ist.

8. Injektionspacker (1) nach mindestens einem der Ansprüche 5 bis 7, **dadurch gekennzeichnet,**
**dass** die zweite Schlauchleitung (8) durch das an dem Flansch (4) angeordnete erste Anschlussstück (10) aus dem Injektionspacker (1) hinausgeführt ist.

9. Injektionspacker (1) nach mindestens einem der Ansprüche 5 bis 8, **dadurch gekennzeichnet,**
**dass** die zweite Schlauchleitung (9) in dem an der dehnbaren Hülle (6) angeordneten zweiten Anschlussstück (11) klemmend gehalten ist.

10. Injektionspacker (1) nach mindestens einem der Ansprüche 5 bis 9, **dadurch gekennzeichnet,**
**dass** das zweite Anschlussstück (11) einen Gewindeabschnitt (11a) aufweist, in oder auf welchen ein in die zweite Schlauchleitung (9) eingestecktes bzw. einsteckbares Klemmteil (12) ein- oder aufgeschraubt bzw. ein- oder aufschraubbar ist, so dass die zweite Schlauchleitung (9) zwischen dem Klemmteil (12) und dem zweiten Anschlussstück (11) klemmend gehalten ist.

11. Injektionspacker (1) nach Anspruch 10, **dadurch gekennzeichnet,**
**dass** das Klemmteil (12) einen durchgängigen, zentralen Durchbruch (16) aufweist, der zum Ausbringen des Injektionsmittels mit der zweiten Schlauchleitung (9) in Verbindung steht.

12. Injektionspacker (1) nach Anspruch 10 oder 11, **dadurch gekennzeichnet,**
**dass** das Klemmteil (12) sich zu seinem freien Ende hin radial verbreitert (12a).

13. Injektionspacker (1) nach mindestens einem der Ansprüche 10 bis 12, **dadurch gekennzeichnet,**
**dass** das Klemmteil (12) einen Gewindeabschnitt (12b) zum Verbinden mit dem zweiten Anschlussstück (11) und einen Klemmabschnitt (12c) zum Einstecken in die zweite Schlauchleitung (9) aufweist.

14. Injektionspacker (1) nach Anspruch 13, **dadurch gekennzeichnet,**
**dass** an dem Klemmabschnitt (12c) ein Klemmmittel (12d), insbesondere wenigstens ein umlaufender Klemmvorsprung angeordnet ist.

15. Injektionspacker (1) nach mindestens einem der Ansprüche 1 bis 14, **dadurch gekennzeichnet,**
**dass** die zweite Schlauchleitung (9) ohne Öffnen des Injektionspackers (1) in die erste Schlauchleitung (8) einführbar bzw. aus dieser entnehmbar ist, gegebenenfalls nach Abschrauben des Klemmteils (12) von dem zweiten Anschlussstück (11) und/oder nach Entfernen des Klemmteils (12) von der zweiten Schlauchleitung (9).
